# FASCICULE DE BREVET EUROPEEN

(11) **EP 3 449 118 B1**
(45) Date de publication et mention de la délivrance du brevet: **27.01.2021**
(21) Numéro de dépôt: 17719568.2
(22) Date de dépôt: 25.04.2017
(51) Int. Cl.: G01F 1/10, G01F 1/12, G01F 1/115, F03B 3/04, F03B 15/18, F03B 13/00, F03B 11/00

(54) **TURBINE POUR CONDUITE AVEC LIMITATION DE VITESSE**
DREHZAHLBEGRENZTE TURBINE FÜR EINE LEITUNG
SPEED-LIMITED TURBINE FOR CONDUIT

(30) Priorité: 26.04.2016 FR 1653675
(43) Date de publication de la demande: 06.03.2019
(73) Titulaire: SAVE Innovations, 38000 Grenoble (FR)
(72) Inventeur: LAMBINET, Gilles, 38240 MEYLAN (FR)
(74) Mandataire: Novaimo
(86) Numéro de dépôt international: PCT/EP2017/059713
(87) Numéro de publication internationale: WO 2017/186667

(56) Documents cités:
- WO-A1-03/054386
- WO-A1-2006/016012
- WO-A1-2006/035119
- WO-A1-2015/044795
- GB-A- 1 045 007
- US-A- 3 813 940

## Description

L'invention porte sur une turbine de production d'électricité pour conduite comprenant un ensemble turbine incluant un rotor et un système de limitation de vitesse (voir par exemple WO 2006/035119 A). Elle porte aussi sur un système comprenant un capteur alimenté électriquement par une telle turbine pour conduite.

Lorsqu'une turbine est placée à l'intérieur d'une conduite transportant un fluide hydraulique ou aéraulique afin de transformer une partie de l'énergie d'écoulement du fluide en énergie électrique, il y a des situations où le fluide qui s'écoule dans la conduite présente d'importantes variations de vitesse. Notamment, une canalisation doit pouvoir accepter une forte hausse de débit pour répondre aux normes de sécurité en cas d'incendie, et recevoir le débit correspondant à une borne incendie. Or, lorsqu'une turbine est soumise à des fortes variations de vitesse, plusieurs problèmes se posent. Si la turbine est prévue pour une gamme restreinte de vitesse, elle peut être endommagée par un flux s'écoulant à une vitesse trop élevée. Au contraire, si une turbine est surdimensionnée afin de résister à une éventuelle survitesse du fluide, cela engendre un surcoût très important de la turbine. D'autre part, ce surdimensionnement ne se justifie pas puisque la turbine fonctionne pendant la majeure partie du temps avec un débit de fluide ayant une vitesse normale ou faible, et n'atteindrait quoi qu'il en soit pas un rendement très intéressant dans ces vitesses excessives. Les recherches de compromis entre ces contraintes contradictoires n'ont pas donné des solutions satisfaisantes dans l'état de la technique.

Ainsi, un objet général de la présente invention est de proposer une solution de turbine pour conduite permettant de faire face aux contraintes susmentionnées, en surmontant les inconvénients des solutions de l'état de la technique.

Plus précisément, un objet de l'invention est de fournir une turbine pour conduite simple et ayant un faible coût, et adaptée pour une utilisation dans une conduite dans laquelle un fluide peut circuler selon un débit qui peut présenter de forte variations de vitesse, éventuellement durant de courts intervalles de temps, notamment dans le cas du fonctionnement d'une borne à incendie.

A cet effet, l'invention repose sur une turbine de production d'électricité pour conduite comprenant un ensemble turbine incluant un rotor, caractérisée en ce que la turbine comprend un dispositif de limitation de vitesse qui comprend au moins un élément élastique lié à l'ensemble turbine de sorte à limiter le débit du fluide traversant le rotor afin de limiter la vitesse de rotation du rotor de l'ensemble turbine. Pour cela, la au moins un élément élastique peut permettre ou non le déplacement de l'ensemble turbine de sorte à limiter ou non le débit du fluide traversant le rotor.

La liaison du au moins un élément élastique avec l'ensemble turbine est telle que la poussée engendrée par le fluide sur l'ensemble turbine est apte à provoquer un déplacement de l'ensemble turbine à l'encontre du au moins un élément élastique, notamment selon l'axe d'écoulement du fluide si la poussée du fluide dépasse un seuil prédéfini.

La liaison entre l'ensemble turbine et le au moins un élément élastique peut être telle que ce dernier maintient l'ensemble turbine dans sa position initiale en fonctionnement normal si la vitesse de rotation du rotor de l'ensemble turbine est inférieure à un seuil de vitesse prédéfini.

Le au moins un élément élastique peut être précontraint lors de son assemblage avec l'ensemble turbine, de sorte à maintenir le fonctionnement normal de manière stable de l'ensemble turbine, lors duquel la vitesse de rotation du rotor de l'ensemble turbine est sous un seuil de vitesse prédéfini.

Le seuil de vitesse prédéfini du rotor peut être compris entre 1000 et 4000 tours par minute inclus.

L'ensemble turbine peut être apte à un positionnement à l'intérieur d'une conduite ou d'un corps de turbine transportant un fluide, et une partie du au moins un élément élastique peut être lié à l'ensemble turbine et une autre partie être apte à une liaison avec la conduite ou le corps de turbine, de sorte que l'ensemble turbine est mobile élastiquement par rapport à la conduite ou le corps de turbine.

L'ensemble turbine peut posséder une extrémité d'entrée pour le fluide et une extrémité de sortie pour le fluide et l'ensemble turbine peut être muni d'au moins une butée arrière pour au moins un élément élastique, notamment un ressort linéaire, dont la première extrémité est fixée sur la butée arrière et la seconde extrémité est fixée à la conduite ou au corps de turbine.

La turbine pour conduite peut comprendre un corps de turbine au sein duquel est agencé l'ensemble turbine et cet ensemble turbine peut comprendre une partie non-tournante présentant une surface extérieure coopérant avec la surface intérieure du corps de turbine.

Le volume intérieur du corps de turbine peut comprendre une section variable dans le sens longitudinal de sorte que lorsque l'ensemble turbine est déplacé en fonctionnement en survitesse à l'encontre du au moins un élément élastique sous l'effet de la poussée du fluide, sa partie avant se trouve en une zone de section plus grande du corps de turbine que lorsqu'il est en fonctionnement normal, non déplacé, pour permettre à une partie plus importante du fluide s'écoulant dans le corps de turbine de passer à l'extérieur du rotor de l'ensemble turbine.

Lorsque l'ensemble turbine se trouve en fonctionnement en survitesse, il peut y avoir augmentation du débit du fluide s'écoulant entre la surface intérieure du corps de turbine et la surface extérieure de la partie non-tournante de l'ensemble turbine.

En fonctionnement normal de l'ensemble turbine, sa partie non tournante peut être en butée contre un corps de turbine ou une surface d'une conduite, de sorte que tout le fluide provenant d'une conduite amont passe à travers le rotor de l'ensemble turbine.

Le corps de turbine peut être composé de deux demi corps avant et arrière, le au moins un élément élastique peut être lié d'une part à l'ensemble turbine et d'autre part au demi corps arrière du corps de turbine, et la surface intérieure du corps de turbine peut être en contact avec la surface extérieure profilée de l'ensemble turbine de sorte à guider le déplacement de l'ensemble turbine lorsque ce dernier passe d'un fonctionnement normal à un fonctionnement en survitesse ou inversement sous l'effet de la poussée du fluide.

Le corps de turbine peut comprendre deux disques dont un premier disque avant formant un dispositif de connexion pour une conduite amont et un deuxième disque arrière formant un dispositif de connexion pour une conduite aval.

L'invention porte aussi sur un système de mesure d'au moins une caractéristique d'un fluide s'écoulant dans une conduite, caractérisé en ce qu'il comprend au moins un capteur apte à mesurer au moins une grandeur caractéristique d'un fluide traversant la conduite, et en ce qu'au moins un capteur est connecté électriquement à une turbine pour conduite telle que décrite précédemment pour l'alimentation électrique dudit au moins un capteur.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 représente une vue en perspective partiellement ouverte d'une turbine en fonctionnement normal selon un mode de réalisation de l'invention.
La figure 2 représente une vue en coupe longitudinale de la turbine en fonctionnement normal selon le mode de réalisation de l'invention.
La figure 3 représente une vue de face de l'entrée de la turbine en fonctionnement normal selon le mode de réalisation de l'invention.
La figure 4 représente une vue arrière de la sortie de la turbine en fonctionnement normal selon le mode de réalisation de l'invention.
La figure 5 représente une vue en perspective partiellement ouverte d'une turbine en fonctionnement en survitesse selon le mode de réalisation de l'invention.
La figure 6 représente une vue en coupe longitudinale de la turbine en fonctionnement en survitesse selon le mode de réalisation de l'invention.
La figure 7 représente une vue schématique et fonctionnelle en coupe longitudinale de la turbine en fonctionnement normal selon le mode de réalisation de l'invention.
La figure 8 représente une vue schématique et fonctionnelle en coupe longitudinale de la turbine en fonctionnement en survitesse selon le mode de réalisation de l'invention.
La figure 9 représente l'évolution de la production d'électricité d'une turbine selon le mode de réalisation de l'invention en fonction du débit de fluide circulant dans la conduite, illustrant ainsi l'effet de l'invention.

Pour faciliter la description, nous utiliserons par convention la direction longitudinale pour la direction de l'axe de la turbine, et les adjectifs « avant » et « arrière » considérés dans le sens d'un écoulement de fluide au travers de la turbine.

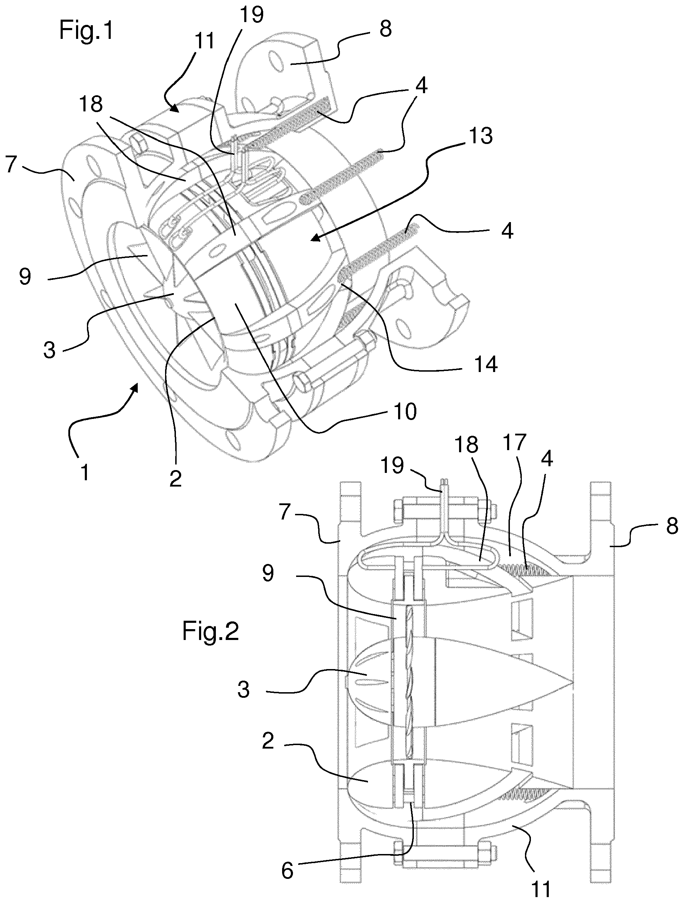

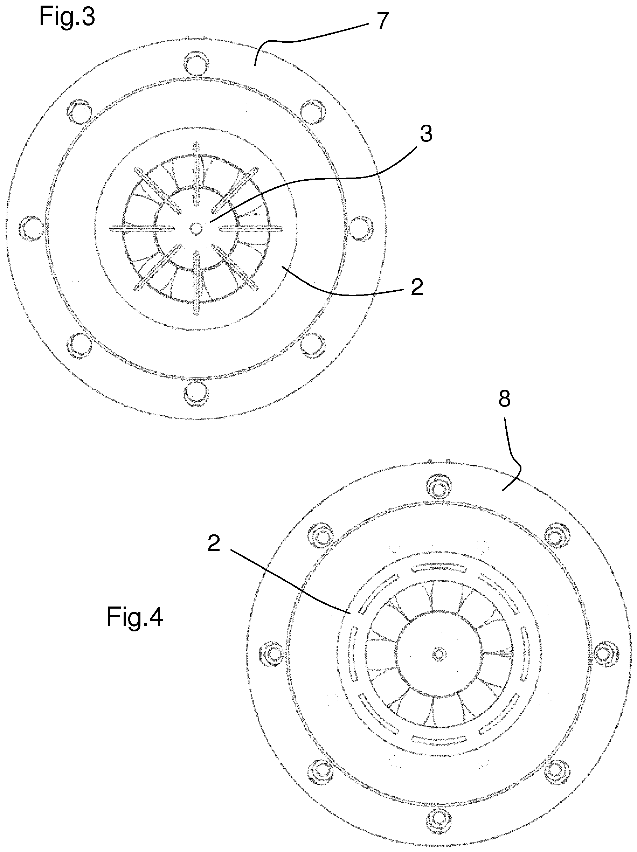

Les figures 1 à 4 représentent une turbine 1 selon un mode de réalisation de l'invention dans un fonctionnement normal. Cette turbine 1 comprend un ensemble turbine 13 et est munie d'au moins un élément élastique 4.

L'ensemble turbine 13 est composé d'une partie non-tournante 2 englobant le stator du générateur 6, disposé en configuration annulaire. Il comprend aussi un rotor 3 disposé au centre, qui comprend un rotor inducteur dont les aimants permanents sont disposés en périphérie des pales 9 de la turbine. L'ensemble turbine 13 comprend enfin des moyens de connexion électrique 19 reliant électriquement les bornes de connexion électrique du stator du générateur 6 à l'extérieur du corps de turbine 11 qui sera décrit ci-après.

La partie non-tournante 2 comprend une surface extérieure 10 profilée sur sa périphérie. La partie non-tournante 2 est munie d'au moins une butée arrière 14 sur laquelle prend appui ou est liée une extrémité d'un élément élastique 4. Selon le mode de réalisation, la surface extérieure 10 comprend des nervures 18, qui s'étendent sur presque toute sa longueur, de l'avant vers l'arrière. L'extrémité arrière des nervures 18 forme les butées arrières 14, mentionnées ci-dessus. Entre ces nervures 18 sont créées des voies de passage pour un fluide, comme cela sera détaillé par la suite. Pour cela, la forme de la surface extérieure 10 est profilée pour favoriser un tel écoulement.

Selon le mode réalisation, la turbine 1 comprend de plus un corps de turbine 11 agencé autour de l'ensemble turbine 13. Il est formé de deux demi corps avant et arrière, fixés entre eux en périphérie centrale par des vis et boulons, pour faciliter le montage de la turbine. Ce corps de turbine 11 possède une symétrie cylindrique d'axe confondu avec l'axe de rotation du rotor 3. Le volume intérieur du corps de turbine 11 possède une section de dimension variable dans le sens longitudinal.

Dans ce mode de réalisation, plusieurs éléments élastiques 4, des ressorts linéaires orientés longitudinalement, sont disposés de manière régulière autour de l'ensemble turbine. La première extrémité de chacun de ces ressorts est fixée sur une butée arrière 14 formée par les nervures 18 et la seconde extrémité est fixée au corps de turbine 11, vers l'arrière du corps de turbine. Ces éléments élastiques 4 sont montés précontraints lors de l'assemblage de l'ensemble turbine 13 avec le corps de turbine 11. En variante, les éléments élastiques peuvent se présenter sous une forme différente, et/ou selon un nombre et un agencement différents. Ils pourraient ainsi être des ressorts ondulés, dans un logement circulaire, ou des vérins à gaz, etc.

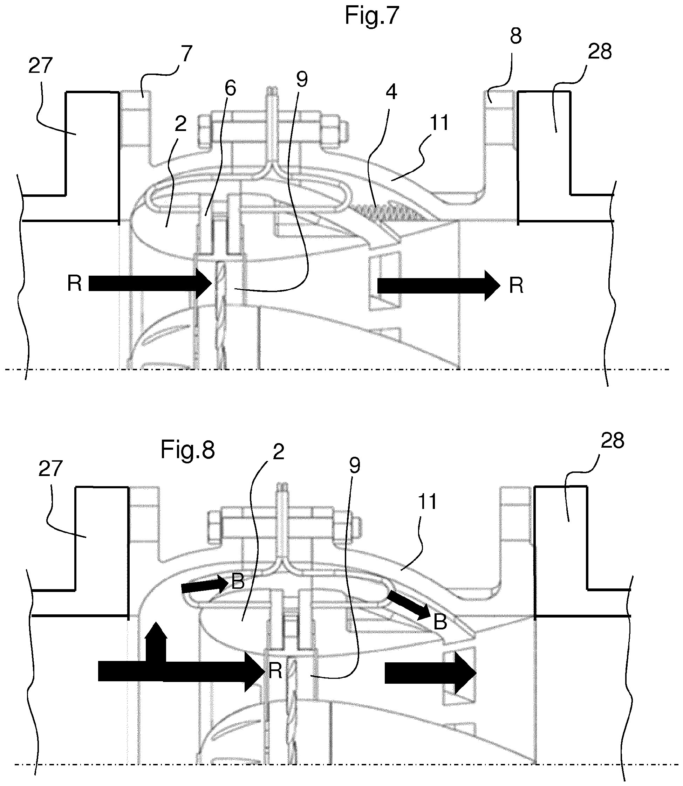

La turbine 1 est destinée à prendre place au sein d'une conduite de canalisation comme représenté sur les figures 7 et 8. Selon ce mode de réalisation, le corps de turbine 11 comprend deux disques avant 7 et arrière 8 au niveau de ses extrémités, formant des dispositifs de connexion pour leur fixation respectivement sur une conduite amont 27 et aval 28. Ces dispositifs de connexion comprennent notamment des ouvertures pour une fixation par l'intermédiaire d'écrous et boulons. Dans un tel montage, l'axe de l'ensemble turbine 13 est confondu avec l'axe central de la conduite d'écoulement du fluide. La turbine 1 prend donc place dans une section de canalisation de circulation d'un fluide, notamment dans une conduite destinée au transport à distance ou à la distribution d'un fluide, comme une conduite de distribution d'eau. Le corps de turbine 11 permet de maintenir l'intégrité du confinement, notamment la pression, l'étanchéité et la section de passage minimum du fluide traversant l'ensemble turbine 13.

L'ensemble turbine est ainsi intégralement disposé à l'intérieur de la conduite. Dans ce mode de réalisation, l'ensemble turbine est ainsi intégralement disposé à l'intérieur de la conduite par l'intermédiaire du corps de turbine 11 qui vient en continuité de la conduite et forme finalement une portion de conduite.

Dans le fonctionnement normal de la turbine 1, représenté par les figures 1 à 4, la partie avant de la partie non tournante 2 de l'ensemble turbine 13 est en butée contre la partie avant du corps de turbine 11, notamment le disque avant 7. Cette position en butée est maintenue stable par la contrainte exercée par les éléments élastiques 4. Un volume 17 libre est présent à l'arrière de l'ensemble turbine, entre son corps extérieur et le corps de turbine 11, pour autoriser le déplacement vers l'arrière de l'ensemble turbine 13, comme cela va maintenant être détaillé.

En effet, le fonctionnement de la turbine 1 selon le mode de réalisation va maintenant être expliqué.

Le concept de la turbine 1 selon l'invention est de permettre un déplacement de l'ensemble turbine lorsqu'il est soumis à une poussée par le fluide supérieure à un seuil prédéfini lors d'un écoulement anormalement rapide, afin de permettre à une plus grande partie de fluide de s'écouler hors du rotor pour éviter que l'ensemble turbine ne subisse des contraintes trop élevées. Par ce biais, l'ensemble turbine reste toujours soumis à un écoulement limité à une vitesse maximale choisie, correspondant à l'énergie électrique à produire maximale souhaitée et aux contraintes de simplicité et de coûts recherchées pour l'ensemble turbine. La combinaison d'au moins un élément élastique avec l'ensemble turbine forme ainsi un dispositif de limitation de vitesse de la turbine.

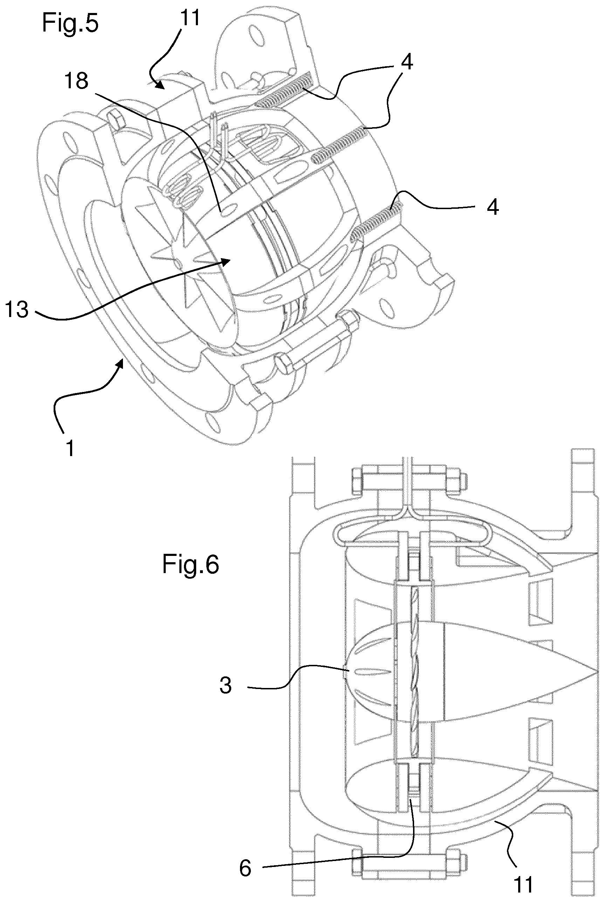

L'ensemble turbine 13 peut donc prendre deux positions caractéristiques par rapport au corps de turbine 11, selon les deux modes de fonctionnement envisagés. Le fonctionnement normal, décrit en référence avec les figures 1 à 4, et 7, et le fonctionnement en survitesse, représenté par les figures 5 et 6, et 8. L'ensemble turbine 13 se trouve en fonctionnement normal lorsque la vitesse d'écoulement du fluide sortant de la conduite amont 27 se trouve dans une plage de vitesse normale, c'est-à-dire sous un certain seuil. Au-delà, l'ensemble turbine 13 se trouve déplacé en fonctionnement en survitesse, sous l'effet de la poussée exercée sur sa surface avant par le fluide, qui dépasse la force opposée de maintien exercée par les éléments élastiques. Ainsi, le choix des éléments élastiques permet de déterminer le seuil de passage du fonctionnement normal au fonctionnement en survitesse de la turbine, et donc indirectement de fixer le seuil maximal de vitesse ou de débit du fluide au sein de l'ensemble turbine et la vitesse maximale du rotor de la turbine. Dans le mode de réalisation, l'ensemble turbine 13 se déplace en translation de l'amont vers l'aval par rapport au corps de turbine 11, si l'effort axial de poussée induit par l'écoulement du fluide comprime les ressorts au-delà de leur valeur de précontrainte. Ce déplacement s'effectue selon l'axe d'écoulement du fluide, confondu avec l'axe longitudinal de la turbine.

Notamment, la turbine selon le mode de réalisation est adaptée pour une insertion dans des conduites de diamètre compris entre 50mm et 2000mm, de préférence entre 50mm et 500mm. Dans ces applications, il est intéressant de fixer le seuil de passage de la turbine de son fonctionnement normal vers son fonctionnement en survitesse pour des vitesses d'écoulement du fluide comprises entre 1 m/s et 3 m/s inclus. Ce seuil est choisi de manière dépendante de la vitesse maximale acceptable par le rotor 3 de l'ensemble turbine 13, qu'il est préférable de maintenir inférieure à une valeur comprise entre 1 et 4 mille tours par minute environ, suivant le diamètre de la conduite.

Dans le mode de réalisation de l'invention, le passage de l'ensemble turbine d'une position caractéristique à l'autre, du fonctionnement normal vers en survitesse et inversement, est guidé selon l'axe d'écoulement du fluide par la coopération des nervures 18 agencées sur la surface extérieure de l'ensemble turbine 13 avec la surface intérieure du corps de turbine 11. En effet, ces nervures 18 restent en appui sur cette surface intérieure et glissent contre cette surface lors du déplacement de l'ensemble turbine. Cette coopération permet un maintien radial de l'ensemble turbine et participe à son guidage lors de son déplacement. Les figures 5 et 6 représentent le fonctionnement en survitesse maximal de l'ensemble turbine. Cette position est maintenue stable par une butée de la surface extérieure arrière de l'ensemble turbine 13 sur le corps de turbine 11. Pour cela, les formes de la surface extérieure arrière de l'ensemble turbine 13 et de la surface intérieure du corps de turbine 11 correspondent, pour permettre un appui formant butée sur toute la périphérie de l'ensemble turbine, maintenant cette position stable radialement et axialement. Les ressorts sont alors comprimés au maximum. Cette position déplacée reste stable tant que le débit du fluide reste élevé. Dès que ce débit retrouve une valeur normale, l'ensemble turbine retrouve automatiquement son fonctionnement normal sous l'effet des ressorts qui exercent une force de rappel et le repositionnent en fonctionnement normal, en butée avant.

Selon le mode de réalisation, en fonctionnement normal, tout le fluide provenant de la conduite amont 27 traverse la turbine 1 et participe donc à la rotation des pales 9 du rotor 3, comme représenté par les flèches R sur la figure 7. La partie frontale de l'ensemble turbine 13 est en butée contre le disque avant 7 sans libérer aucun espace pour le passage du fluide autre que dans l'espace central où se trouve le rotor. En fonctionnement en survitesse, la partie avant de l'ensemble turbine 13 se trouve déplacée et positionnée au niveau d'une section plus grande du corps de turbine, ce qui libère un espace entre sa surface extérieure de l'ensemble turbine 13 et le corps de turbine 11, par lequel va s'écouler une partie du fluide, comme représenté par les flèches B sur la figure 8. Plus précisément, ce fluide va s'écouler autour de l'ensemble turbine 13 par les espaces délimités par les nervures 18, qui forment des voies de passage. Ce principe de fonctionnement est donc représenté schématiquement par les figures 7 et 8. La géométrie de ces espaces (et voies de passage) est déterminée pour permettre un débit suffisant de fluide hors du rotor en cas de trop forte vitesse d'écoulement du fluide. Dans un mode de réalisation alternatif, une partie du fluide sortant de la conduite amont 27 pourrait traverser la turbine 11 sans traverser son rotor 3 par toute voie de by-pass autre que les voies de passage autour de l'ensemble turbine, dans le cas d'un trop fort débit. Par exemple, des voies de by-pass peuvent être agencées au sein de l'ensemble turbine, fermées par des clapets ne s'ouvrant qu'au-delà d'une certaine poussée exercée par le fluide. L'ouverture de chaque clapet est fonction d'au moins un élément élastique. Dans ce cas, l'ensemble turbine ne se déplace pas, il est fixe.

La turbine 1 permet avantageusement la génération d'une faible quantité d'électricité, adaptée pour l'alimentation électrique d'un dispositif peu exigeant comme un ou plusieurs capteur(s) mesurant au moins une grandeur caractéristique du fluide traversant la conduite, par exemple le pH, la température, le débit, la composition chimique, et/ou la qualité du fluide. Selon le mode de réalisation présenté ici, les moyens d'alimentation électrique sont formés par deux fils électriques reliant les bornes électriques du générateur 6 à l'extérieur du corps de turbine 11. Ces deux fils électriques sont agencés de sorte que les parties des fils électriques se trouvant à l'extérieur du corps de turbine 11 restent indépendantes du mouvement de l'ensemble turbine 13. Ainsi, l'invention porte aussi sur un système de mesure d'au moins une caractéristique d'un fluide s'écoulant dans une conduite, comprenant au moins un capteur apte à mesurer au moins une grandeur caractéristique d'un fluide traversant la conduite, le au moins un capteur étant connecté électriquement à une turbine pour conduite telle que décrite précédemment, notamment comprenant un dispositif de limitation de vitesse.

Le dispositif de limitation de vitesse de la turbine telle que décrite précédemment permet de remédier aux inconvénients mentionnés dans l'état de la technique et ainsi de mettre en œuvre des turbines pour conduites sans avoir à prévoir un surdimensionnement spécial de la turbine pour faire face à d'éventuelles fortes variations de vitesse du fluide passant dans la conduite, notamment lors du fonctionnement d'une borne à incendie. La solution retenue permet aussi de se passer du surcoût financier et d'obtenir une turbine adaptée pour une génération d'une faible quantité d'énergie électrique à partir d'un faible écoulement de fluide, et fonctionnant toujours dans une plage de vitesse d'écoulement réduite, lui permettant de rester dans des conditions de fonctionnement autour de ses conditions nominales garantissant un bon rendement de production d'électricité.

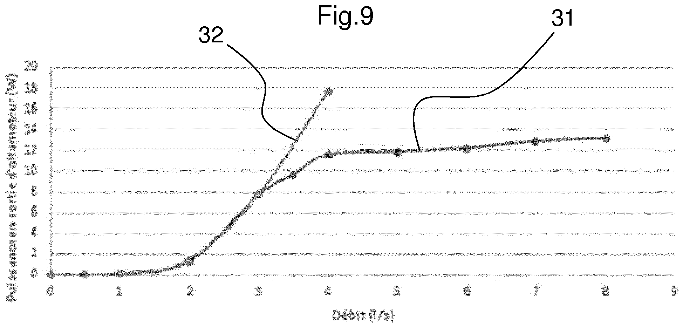

La figure 9 illustre à titre d'exemple la courbe de production d'électricité 31 d'une turbine selon un mode de réalisation de l'invention en fonction du débit de fluide circulant dans la conduite dans laquelle la turbine est installée. En comparaison, la figure représente la courbe de production d'électricité 32 d'une turbine de même dimension mais qui ne serait pas équipée d'un dispositif de by-pass comme celle de l'invention. Aux faibles débits de fluide, les deux courbes sont superposées, les deux turbines produisent la même puissance électrique. Lorsque le débit dépasse un seuil, de l'ordre de 3 sur cet exemple illustré, la courbe 32 poursuit son augmentation et la turbine correspondante risque surtout une rapide dégradation par le fait qu'elle est soumise à un débit dépassant son seuil d'admission. Au contraire, la turbine selon le mode de réalisation de l'invention présente une production d'électricité qui se stabilise, augmente très légèrement, à une valeur correspondant à un débit maximum acceptable pour la turbine : cette stabilisation correspond à la phase de by-pass d'une partie du débit de fluide hors de la turbine.

Naturellement, l'invention ne se limite pas au mode de réalisation décrit. Notamment, l'ensemble turbine pourrait présenter toute autre géométrie. De plus, sa coopération avec au moins un élément élastique pourrait être différente, et son déplacement pourrait être de nature différente, non nécessairement une translation. Le corps de turbine 11 est avantageux en ce qu'il permet de former un tout avec l'ensemble turbine mobile, prêt à une connexion avec des conduites existantes. Toutefois, en variante, l'ensemble turbine et son ou ses éléments élastiques pourraient être agencés directement au sein d'une conduite existante, sans besoin d'un corps de turbine. De plus, une partie du fluide pourrait aussi s'écouler hors de la turbine en fonctionnement normal, mais une partie plus importante de fluide s'écoulerait hors de la turbine en fonctionnement en survitesse.

## Revendications

1. Turbine (1) de production d'électricité pour conduite comprenant un ensemble turbine (13) incluant un rotor (3), la turbine (1) comprenant un dispositif de limitation de vitesse pour ledit ensemble turbine (13) qui comprend au moins un élément élastique (4) lié à l'ensemble turbine (13) de sorte à limiter le débit du fluide traversant le rotor (3) afin de limiter la vitesse de rotation du rotor (3) de l'ensemble turbine (13), **caractérisée en ce que** l'ensemble turbine (13) comprend une partie non-tournante (2) englobant un stator de générateur (6), disposé en configuration annulaire, le au moins un élément élastique (4) étant lié à la partie non-tournante (2), la liaison du au moins un élément élastique (4) avec l'ensemble turbine (13) étant telle que la poussée engendrée par le fluide sur l'ensemble turbine (13) est apte à provoquer un déplacement de l'ensemble turbine (13) à l'encontre du au moins un élément élastique (4).

2. Turbine (1) de production d'électricité pour conduite selon la revendication précédente, **caractérisée en ce que** la liaison du au moins un élément élastique (4) avec l'ensemble turbine (13) est telle que la poussée engendrée par le fluide sur l'ensemble turbine (13) est apte à provoquer un déplacement de l'ensemble turbine (13) à l'encontre du au moins un élément élastique (4) selon l'axe d'écoulement du fluide si la poussée du fluide dépasse un seuil prédéfini.

3. Turbine (1) de production d'électricité pour conduite selon l'une des revendications précédentes, **caractérisée en ce que** la liaison entre l'ensemble turbine (13) et le au moins un élément élastique (4) est telle que ce dernier maintient l'ensemble turbine (13) dans sa position initiale en fonctionnement normal si la vitesse de rotation du rotor de l'ensemble turbine (13) est inférieure à un seuil de vitesse prédéfini.

4. Turbine (1) de production d'électricité pour conduite selon l'une des revendications précédentes, **caractérisée en ce que** le au moins un élément élastique (4) est précontraint lors de son assemblage avec l'ensemble turbine (13), de sorte à maintenir le fonctionnement normal de manière stable de l'ensemble turbine (13), lors duquel la vitesse de rotation du rotor de l'ensemble turbine (13) est sous un seuil de vitesse prédéfini.

5. Turbine (1) de production d'électricité pour conduite selon l'une des revendications 3 ou 4, **caractérisée en ce que** le seuil de vitesse prédéfini du rotor est compris entre 1000 et 4000 tours par minute inclus.

6. Turbine (1) de production d'électricité pour conduite selon l'une des revendications précédentes, **caractérisée en ce que** l'ensemble turbine (13) est apte à un positionnement à l'intérieur d'une conduite ou d'un corps de turbine (11) transportant un fluide, et **en ce qu'**une partie du au moins un élément élastique (4) est lié à l'ensemble turbine (13) et une autre partie est apte à une liaison avec la conduite ou le corps de turbine (11), de sorte que l'ensemble turbine (13) est mobile élastiquement par rapport à la conduite ou le corps de turbine (11).

7. Turbine (1) de production d'électricité pour conduite selon la revendication précédente, **caractérisée en ce que** l'ensemble turbine (13) possède une extrémité d'entrée pour le fluide et une extrémité de sortie pour le fluide et **en ce que** l'ensemble turbine (13) est muni de au moins une butée arrière (14) pour au moins un élément élastique (4), notamment un ressort linéaire, dont la première extrémité est fixée sur la butée arrière (14) et la seconde extrémité est fixée à la conduite ou au corps de turbine (11).

8. Turbine (1) de production d'électricité pour conduite selon l'une des revendications précédentes, **caractérisée en ce qu'**elle comprend un corps de turbine (11) au sein duquel est agencé l'ensemble turbine (13) et **en ce que** cet ensemble turbine (13) comprend une partie non-tournante (2) présentant une surface extérieure (10) coopérant avec la surface intérieure du corps de turbine (11).

9. Turbine (1) de production d'électricité pour conduite selon la revendication précédente, **caractérisée en ce que** le volume intérieur du corps de turbine (11) possède une section variable dans le sens longitudinal de sorte que lorsque l'ensemble turbine (13) est déplacé en fonctionnement en survitesse à l'encontre du au moins un élément élastique (4) sous l'effet de la poussée du fluide, sa partie avant se trouve en une zone de section plus grande du corps de turbine (11) que lorsqu'il est en fonctionnement normal, non déplacé, pour permettre à une partie plus importante du fluide s'écoulant dans le corps de turbine de passer à l'extérieur du rotor (3) de l'ensemble turbine (13).

10. Turbine (1) de production d'électricité pour conduite selon la revendication précédente, **caractérisée en ce que** lorsque l'ensemble turbine (13) se trouve en fonctionnement en survitesse, il y a augmentation du débit du fluide s'écoulant entre la surface intérieure du corps de turbine (11) et la surface extérieure (10) de la partie non-tournante (2) de l'ensemble turbine (13).

11. Turbine (1) de production d'électricité pour conduite selon l'une des revendications 6 à 10, **caractérisée en ce qu'**en fonctionnement normal de l'ensemble turbine (13), sa partie non tournante (2) est en butée contre un corps de turbine (11) ou une surface d'une conduite, de sorte que tout le fluide provenant d'une conduite amont (7) passe à travers le rotor (3) de l'ensemble turbine (13).

12. Turbine (1) de production d'électricité pour conduite selon l'une des revendications 8 à 11, **caractérisée en ce que** le corps de turbine (11) est composé de deux demi corps avant et arrière, **en ce que** le au moins un élément élastique (4) est lié d'une part à l'ensemble turbine (13) et d'autre part au demi corps arrière du corps de turbine (11), et **en ce que** la surface intérieure du corps de turbine (11) est en contact avec la surface extérieure profilée de l'ensemble turbine (13) de sorte à guider le déplacement de l'ensemble turbine (13) lorsque ce dernier passe d'un fonctionnement normal à un fonctionnement en survitesse ou inversement sous l'effet de la poussée du fluide.

13. Turbine (1) de production d'électricité pour conduite selon l'une des revendications 8 à 12, **caractérisée en ce que** le corps de turbine (11) comprend deux disques dont un premier disque avant (7) formant un dispositif de connexion pour une conduite amont (27) et un deuxième disque arrière (8) formant un dispositif de connexion pour une conduite aval (28).

14. Système de mesure d'au moins une caractéristique d'un fluide s'écoulant dans une conduite, **caractérisé en ce qu'**il comprend au moins un capteur apte à mesurer au moins une grandeur caractéristique d'un fluide traversant la conduite, et **en ce qu'**au moins un capteur est connecté électriquement à une turbine (1) de production d'électricité pour conduite selon l'une des revendications précédentes pour l'alimentation électrique dudit au moins un capteur.

## Patentansprüche

1. Turbine (1) zur Stromerzeugung für eine Leitung, umfassend eine Turbinenbaugruppe (13) mit einem Rotor (3), wobei die Turbine (1) eine Drehzahlbegrenzungsvorrichtung für die Turbinenbaugruppe (13) aufweist, die mindestens ein elastisches Element (4) aufweist, das mit der Turbinenbaugruppe (13) derart verbunden ist, um die Durchflussmenge des Fluids, das durch den Rotor (3) fließt, zu begrenzen, um die Drehzahl des Rotors (3) der Turbinenbaugruppe (13) zu begrenzen, **dadurch gekennzeichnet, dass** die Turbinenbaugruppe (13) einen nicht drehenden Teil (2) aufweist, der einen Stator des Generators (6) einschließt, der in einer ringförmigen Konfiguration angeordnet ist, wobei das mindestens eine elastische Element (4) mit dem nicht drehenden Teil (2) verbunden ist, wobei die Verbindung des mindestens einen elastischen Elements (4) mit der Turbinenbaugruppe (13) derart ist, dass der Schub, der von dem Fluid auf die Turbinenbaugruppe (13) erzeugt wird, geeignet ist, eine Verschiebung der Turbinenbaugruppe (13) gegen das mindestens eine elastische Element (4) zu verursachen.

2. Turbine (1) zur Stromerzeugung für eine Leitung nach dem vorhergehenden Anspruch, **dadurch gekennzeichnet, dass** die Verbindung des mindestens einen elastischen Elements (4) mit der Turbinenbaugruppe (13) derart ist, dass der Schub, der von dem Fluid auf die Turbinenbaugruppe (13) erzeugt wird, geeignet ist, eine Verschiebung der Turbinenbaugruppe (13) gegen das mindestens eine elastische Element (4) entlang der Strömungsachse des Fluids zu verursachen, wenn der Schub des Fluids einen vorbestimmten Schwellwert übersteigt.

3. Turbine (1) zur Stromerzeugung für eine Leitung nach einem der vorhergehenden Ansprüche, **dadurch gekennzeichnet, dass** die Verbindung zwischen der Turbinenbaugruppe (13) und dem mindestens einen elastischen Element (4) derart ist, dass dieses Letztere die Turbinenbaugruppe (13) in ihrer Ausgangsposition im Normalbetrieb hält, wenn die Drehzahl des Rotors der Turbinenbaugruppe (13) niedriger als ein vorbestimmter Drehzahlschwellwert ist.

4. Turbine (1) zur Stromerzeugung für eine Leitung nach einem der vorhergehenden Ansprüche, **dadurch gekennzeichnet, dass** das mindestens eine elastische Element (4) bei seinem Zusammenbauen mit der Turbinenbaugruppe (13) derart vorgespannt wird, um den Normalbetrieb der Turbinenbaugruppe (13) stabil zu halten, bei dem die Drehzahl des Rotors der Turbinenbaugruppe (13) unter einem vorbestimmten Drehzahlschwellwert liegt.

5. Turbine (1) zur Stromerzeugung für eine Leitung nach Anspruch 3 oder 4, **dadurch gekennzeichnet, dass** der vorbestimmte Drehzahlschwellwert des Rotors zwischen 1.000 und einschließlich 4.000 Umdrehungen pro Minute liegt.

6. Turbine (1) zur Stromerzeugung für eine Leitung nach einem der vorhergehenden Ansprüche, **dadurch gekennzeichnet, dass** die Turbinenbaugruppe (13) für ein Anordnen im Inneren einer Leitung oder einem Turbinenkörper (11) geeignet ist, der ein Fluid transportiert, und dadurch, dass ein Teil des mindestens einen elastischen Elements (4) mit der Turbinenbaugruppe (13) verbunden ist und ein anderer Teil für eine Verbindung mit der Leitung oder dem Turbinenkörper (11) derart geeignet ist, dass die Turbinenbaugruppe (13) in Bezug auf die Leitung oder den Turbinenkörper (11) elastisch beweglich ist.

7. Turbine (1) zur Stromerzeugung für eine Leitung nach dem vorhergehenden Anspruch, **dadurch gekennzeichnet, dass** die Turbinenbaugruppe (13) ein Einlassende für das Fluid und ein Auslassende für das Fluid aufweist und dadurch, dass die Turbinenbaugruppe (13) mit mindestens einem hinteren Anschlag (14) für mindestens ein elastisches Element (4), insbesondere eine Linearfeder, versehen ist, dessen erstes Ende an dem hinteren Anschlag (14) befestigt ist und dessen zweites Ende an der Leitung oder dem Turbinenkörper (11) befestigt ist.

8. Turbine (1) zur Stromerzeugung für eine Leitung nach einem der vorhergehenden Ansprüche, **dadurch gekennzeichnet, dass** sie einen Turbinenkörper (11) aufweist, in dessen Innerem die Turbinenbaugruppe (13) angeordnet ist, und dadurch, dass diese Turbinenbaugruppe (13) einen nicht drehenden Teil (2) aufweist, der eine Außenfläche (10) aufweist, die mit der Innenfläche des Turbinenkörpers (11) zusammenwirkt.

9. Turbine (1) zur Stromerzeugung für eine Leitung nach dem vorhergehenden Anspruch, **dadurch gekennzeichnet, dass** das Innenvolumen des Turbinenkörpers (11) einen variablen Querschnitt in der Längsrichtung derart aufweist, dass sich, wenn die Turbinenbaugruppe (13) im Überdrehzahlbetrieb unter der Wirkung des Schubs des Fluids gegen das mindestens eine elastische Element (4) geschoben wird, ihr vorderer Teil in einem größeren Querschnittsbereich des Turbinenkörpers (11) befindet, als wenn sie, wenn sie nicht geschoben wird, im Normalbetrieb ist, um einem ersten größeren Teil des Fluids, der in dem Turbinenkörper fließt, zu ermöglichen, zur Außenseite des Rotors (3) der Turbinenbaugruppe (13) zu gelangen.

10. Turbine (1) zur Stromerzeugung für eine Leitung nach dem vorhergehenden Anspruch, **dadurch gekennzeichnet, dass**, wenn sich die Turbinenbaugruppe (13) im Überdrehzahlbetrieb befindet, eine Erhöhung der Durchflussmenge des Fluids vorliegt, das zwischen der Innenfläche des Turbinenkörpers (11) und der Außenfläche (10) des nicht drehenden Teils (2) der Turbinenbaugruppe (13) fließt.

11. Turbine (1) zur Stromerzeugung für eine Leitung nach einem der Ansprüche 6 bis 10, **dadurch gekennzeichnet, dass** sich im Normalbetrieb der Turbinenbaugruppe (13) ihr nicht drehender Teil (2) im Anschlag gegen einen Turbinenkörper (11) oder eine Oberfläche einer Leitung derart befindet, dass das gesamte Fluid, das von einer vorgelagerten Leitung (7) kommt, durch den Rotor (3) der Turbinenbaugruppe (13) hindurchgeht.

12. Turbine (1) zur Stromerzeugung für eine Leitung nach einem der Ansprüche 8 bis 11, **dadurch gekennzeichnet, dass** der Turbinenkörper (11) aus zwei Halbkörpern, einem vorderen und einem hinteren besteht, dadurch, dass das mindestens eine elastische Element (4) einerseits mit der Turbinenbaugruppe (13) und andererseits mit dem hinteren Halbkörper des Turbinenkörpers (11) verbunden ist und dadurch, dass die Innenfläche des Turbinenkörpers (11) mit der profilierten Außenfläche der Turbinenbaugruppe (13) derart in Kontakt ist, um die Bewegung der Turbinenbaugruppe (13) zu führen, wenn diese Letztere unter der Wirkung des Schubs des Fluids von einem Normalbetrieb in einen Überdrehzahlbetrieb übergeht oder umgekehrt.

13. Turbine (1) zur Stromerzeugung für eine Leitung nach einem der Ansprüche 8 bis 12, **dadurch gekennzeichnet, dass** der Turbinenkörper (11) zwei Scheiben aufweist, wovon eine erste vordere Scheibe (7) eine Anschlussvorrichtung für eine vorgelagerte Leitung (27) bildet und eine zweite hintere Scheibe (8) eine Anschlussvorrichtung für eine nachgelagerte Leitung (28) bildet.

14. System zum Messen eines Merkmals eines Fluids, das in einer Leitung fließt, **dadurch gekennzeichnet, dass** es mindestens einen Sensor aufweist, der geeignet ist, mindestens eine Größe zu messen, die für ein Fluid charakteristisch ist, das die Leitung durchfließt, und dadurch, dass mindestens ein Sensor an eine Turbine (1) zur Stromerzeugung für eine Leitung nach einem der vorhergehenden Ansprüche für die Stromversorgung des mindestens einen Sensors elektrisch angeschlossen ist.

## Claims

1. An electricity generation turbine (1) for a conduit comprising a turbine unit (13) including a rotor (3), the turbine (1) comprising a speed limiting device for said turbine unit (13), which device comprises at least one flexible element (4) connected to the turbine unit (13), so as to limit the flow rate of the fluid passing through the rotor (3) in order to limit the rotational speed of the rotor (3) of the turbine unit (13), **characterized in that** the turbine unit (13) comprises a non-rotating part (2) encompassing a stator of the generator (6), disposed in an annular configuration, the at least one flexible element (4) being connected to the non-rotating part (2), the connection of the at least one flexible element (4) with the turbine unit (13) is such that the thrust generated by the fluid on the turbine unit (13) is able to cause the turbine unit (13) to move against the at least one flexible element (4).

2. The electricity generation turbine (1) for a conduit as claimed in the preceding claim, **characterized in that** the connection of the at least one flexible element (4) with the turbine unit (13) is such that the thrust generated by the fluid on the turbine unit (13) is able to cause the turbine unit (13) to move against the at least one flexible element (4) along the flow axis of the fluid if the thrust of the fluid exceeds a predefined threshold.

3. The electricity generation turbine (1) for a conduit as claimed in one of the preceding claims, **characterized in that** the connection between the turbine unit (13) and the at least one flexible element (4) is such that said flexible element keeps the turbine unit (13) in its initial position during normal operation if the rotational speed of the rotor of the turbine unit (13) is below a predefined speed threshold.

4. The electricity generation turbine (1) for a conduit as claimed in one of the preceding claims, **characterized in that** the at least one flexible element (4) is pre-stressed during its assembly with the turbine unit (13), so as to maintain the stability of the normal operation of the turbine unit (13), during which normal operation the rotational speed of the rotor of the turbine unit (13) is below a predefined speed threshold.

5. The electricity generation turbine (1) for a conduit as claimed in one of claims 3 or 4, **characterized in that** the predefined speed threshold of the rotor is between 1,000 and 4,000 revolutions per minute inclusive.

6. The electricity generation turbine (1) for a conduit as claimed in one of the preceding claims, **characterized in that** the turbine unit (13) is able to be positioned inside a conduit or a turbine body (11) carrying a fluid, and **in that** part of the at least one flexible element (4) is connected to the turbine unit (13) and another part is able to be connected to the conduit or the turbine body (11), so that the turbine unit (13) is flexibly movable relative to the conduit or the turbine body (11).

7. The electricity generation turbine (1) for a conduit as claimed in the preceding claim, **characterized in that** the turbine unit (13) has an inlet end for the fluid and an outlet end for the fluid and **in that** the turbine unit (13) is provided with at least one rear stop (14) for at least one flexible element (4), particularly a linear spring, the first end of which is fixed on the rear stop (14) and the second end of which is fixed to the conduit or to the turbine body (11).

8. The electricity generation turbine (1) for a conduit as claimed in one of the preceding claims, **characterized in that** it comprises a turbine body (11), inside which the turbine unit (13) is arranged, and **in that** said turbine unit (13) comprises a non-rotating part (2) having an outer surface (10) cooperating with the inner surface of the turbine body (11).

9. The electricity generation turbine (1) for a conduit as claimed in the preceding claim, **characterized in that** the internal volume of the turbine body (11) has a variable section in the longitudinal direction, so that when the turbine unit (13) is moved during overspeed operation against the at least one flexible element (4) under the effect of the thrust of the fluid, its front part is located in a zone with a section that is larger than the turbine body (11) than when it is in normal, non-moved, operation, so as to allow a greater amount of the fluid flowing in the turbine body to pass outside the rotor (3) of the turbine unit (13).

10. The electricity generation turbine (1) for a conduit as claimed in the preceding claim, **characterized in that** when the turbine unit (13) is in overspeed operation, there is an increase in the flow rate of the fluid flowing between the inner surface of the turbine body (11) and the outer surface (10) of the non-rotating part (2) of the turbine unit (13).

11. The electricity generation turbine (1) for a conduit as claimed in one of claims 6 to 10, **characterized in that**, during normal operation of the turbine unit (13), its non-rotating part (2) is in abutment against a turbine body (11) or a surface of a conduit, so that all the fluid originating from an upstream conduit (7) passes through the rotor (3) of the turbine unit (13).

12. The electricity generation turbine (1) for a conduit as claimed in one of claims 8 to 11, **characterized in that** the turbine body (11) is made up of two front and rear semi-bodies, **in that** the at least one flexible element (4) is connected, on the one hand, to the turbine unit (13), and, on the other hand, to the rear semi-body of the turbine body (11), and **in that** the inner surface of the turbine body (11) is in contact with the profiled outer surface of the turbine unit (13), so as to guide the movement of the turbine unit (13) when said unit switches from normal operation to overspeed operation, or vice versa, under the effect of the thrust of the fluid.

13. The electricity generation turbine (1) for a conduit as claimed in one of claims 8 to 12, **characterized in that** the turbine body (11) comprises two disks, including a first front disk (7) forming a connection device for an upstream conduit (27) and a second rear disk (8) forming a connection device for a downstream conduit (28).

14. A system for measuring at least one characteristic of a fluid flowing in a conduit, **characterized in that** it comprises at least one sensor capable of measuring at least one characteristic value of a fluid passing through the conduit, and **in that** at least one sensor is electrically connected to an electricity generation turbine (1) for a conduit as claimed in one of the preceding claims in order to supply said at least one sensor with power.
